# EUROPEAN PATENT APPLICATION

(11) **EP 1 672 572 A1**
(43) Date of publication of application: **21.06.2006**
(21) Application number: 04106612.7
(22) Date of filing: 15.12.2004
(51) Int. Cl.: G06Q 10/00

(54) **Presentation engine**

(71) Applicant: Agilent Technologies, Inc., Palo Alto, CA 94306 (US)
(72) Inventor: Siebrecht, Stephan c/o Agilent Technologies Dtl., 76337 Waldbronn (DE); Falk-Jordan, Stefan c/o Agilent Technologies Dtl., 76337 Waldbronn (DE)
(74) Representative: Barth, Daniel Mathias

(57) **Abstract**

A presentation engine adapted for performing a presentation in accordance with a predefined decision tree is described. The decision tree is represented by an action table comprising a set of entries, each entry comprising an entry identifier. The presentation engine comprises an entry tracking unit adapted for finding a current entry specified by a current entry identifier, and an entry processing unit adapted for performing an action defined by the current entry, said action being at least one of: displaying information, gathering user input, gathering system status parameters, controlling an external device. The presentation engine further comprises a next entry selection unit adapted for acquiring a return code indicating an outcome of the action, for selecting, in dependence on the return code, a next entry identifier of a next entry to be processed, and for redefining this next entry identifier as a current entry identifier.

## Description

### BACKGROUND ART

The present invention relates to a presentation engine adapted for performing a presentation, to a presentation system, and to an action table comprising a plurality of entries. The present invention further relates to a method for performing a presentation.

Presentations involving the display of audiovisual contents become more and more important in many different areas, such as e.g. product presentation, marketing, education, support. However, for setting up and editing a presentation, e.g. a product presentation or an audiovisual support tool for a product, it is necessary to hire a multimedia specialist having considerable computer skills. So far, setting up and editing an audiovisual presentation is an expensive task.

Presentation authoring tools are described e.g. in US2003/0001904A1, WO02/17165A2, US2003/0212744A1, US2002/0038168A1, or GB2358264A. In GB2358264A, a complex expert system knowledge base based on a Bayesian network is used.

### DISCLOSURE OF THE INVENTION

It is an object of the invention to simplify the set-up and modification of presentations. The object is solved by the independent claim(s). Preferred embodiments are shown by the dependent claim(s).

According to embodiments of the present invention, a presentation engine is provided. The presentation engine is adapted for performing a presentation in accordance with a predefined decision tree, said decision tree being represented by an action table comprising a set of entries, whereby each entry comprises an entry identifier. The presentation engine comprises an entry tracking unit adapted for finding a current entry specified by a current entry identifier, and an entry processing unit adapted for performing an action defined by the current entry, said action being at least one of: displaying information, gathering user input, gathering system status parameters, controlling an external device. The presentation engine further comprises a next entry selection unit adapted for acquiring a return code indicating an outcome of the action, whereby the current entry comprises next entry identifiers for possible values of the return code. The next entry selection unit is further adapted for selecting, in dependence on the return code, a next entry identifier of a next entry to be processed, and for redefining this next entry identifier as a current entry identifier.

For performing a presentation, the presentation engine according to embodiments of the present invention accesses an action table comprising at least one action table entry. The presentation is set up by means of these action table entries. For example, a certain entry might be related to the display of audiovisual contents, whereby the audiovisual content might e.g. be identified in dedicated data fields of an entry. However, the actions defined by the action table entries are not limited to displaying information. For example, there might exist entries that prompt the user to provide input, whereby the further presentation might be varied in dependence on the user's input. Thus, it is possible to adapt the displayed information to the user's needs, and to realize interactive audiovisual presentations. Furthermore, there might exist entries that acquire system parameters of the presentation environment, like e.g. hardware capabilities. In this case, displayed audiovisual contents might be adapted to the available hardware of the presentation environment. On a high-end system, different contents might be shown than on a system with limited capabilities.

One major aspect is that the presentation engine is implemented as a separate unit, which might be thought of as a "player" for the contents defined by the action table. The action table might e.g. be realized as an independent data structure that can easily be set-up and edited, even by people that are not very familiar with programming. The syntax of the table entries is rather simple, and accordingly, everybody can contribute to setting up a presentation.

Hence, the way a presentation is performed might e.g. depend on user inputs, system parameters, hardware capabilities, etc. Insofar, the presentation can be represented by a flow chart, or by a decision tree. For implementing this structure, the presentation engine's next entry selection unit is adapted for acquiring a return code from the action that is being processed. The return code might e.g. correspond to a user input, to a status variable, etc. For each possible value of the return code, the entry comprises a corresponding next entry identifier. For example, if the user's input is "Yes", a next entry corresponding to "Yes" will be identified, and if the user's input is "No", a next entry corresponding to "No" will be identified. From the set of next entry identifiers provided in the entry that is currently being processed and the return code, a next entry to be processed can be determined. Thus, the various entries can be related to one another, and complex flow charts can be realized.

According to a preferred embodiment, at least one of the entries comprises one or more data fields specifying presentation information to be displayed to a user, said presentation information comprising at least one of pictures, video clips, audio tracks, textual annotations.

According to a preferred embodiment, at least one of the entries comprises a data field for an action identifier indicating an action to be performed when the entry is being processed.

According to a preferred embodiment, at least one of the entries comprises a data field indicating a type of entry, with the types of entries comprising at least one of the following: user type entries adapted for at least one of displaying information to a user and prompting the user to provide input; internal type entries adapted for performing presentation engine commands; external device entries adapted for providing commands to an external device. According to this embodiment, a communication is established between a user and a presentation system, or between a user, a presentation system and an external device. However, the types of entries are not limited to the above examples. Other types of entries might additionally be defined, in order to provide for interactive communication with different persons, different devices, or different networks. For example, certain entries may prompt a second user to provide input, other entries may be related to accessing the Internet, etc.

According to a preferred embodiment, at least some of the entries comprise a data field specifying a delay, said delay being applied when performing an action defined by an entry.

According to a preferred embodiment, the presentation engine comprises at least one of the following: a display unit adapted for displaying presentation information as specified by an entry, a user input inquiry unit adapted for prompting the user to provide input information, an external device control unit adapted for providing commands specified in the current entry to an external device, a status inquiry unit adapted for gathering status information.

According to a preferred embodiment, the presentation engine is adapted for providing support information related to an external device. The presentation engine is well-suited for being used as a support tool providing support information for an external device. In case the device does not work as expected, or in case of an error, the user may consult the support tool. For example, the support tool might ask the user to answer several questions, in order to identify the respective error. Furthermore, in case the external device is connected with the support system, the action table might comprise entries adapted for establishing a communication with the external device. For example, status parameters might be obtained from the external device, and control commands like e.g. "reset" might be sent the external device. Furthermore, audiovisual information might be displayed to the user, telling him or her how the problem can be fixed. In many cases, a recovery of the external device can be accomplished. Implementing a support tool as described above helps to minimize the requests a support team has to deal with, because many problems may be fixed without consulting the support team.

According to a preferred embodiment, the presentation engine is further adapted for providing commands specified in an entry to an external device. For example, control commands like "reset" might be sent the external device, robot arms may be moved to their default positions, etc.

According to a preferred embodiment, the presentation engine is adapted for being executed on a computer system.

Embodiments of the present invention further relate to a presentation system adapted for performing a presentation in accordance with a predefined decision tree, with said decision tree being represented by an action table comprising a plurality of entries, whereby each entry comprises an entry identifier. The presentation system comprises, in addition to the action table, a presentation engine as described above, said presentation engine being adapted for accessing entries of the action table and for performing respective actions defined by the entries. Said actions comprise at least one of: displaying information, gathering user input, gathering system status parameters, controlling an external device.

In prior art solutions, a presentation program has been realized as one piece of software. In this case, it is rather cumbersome to modify the presentation later on, because this implies that the presentation program has to be reprogrammed. However, presentations often have to be modified. For example, it might be necessary to adapt a presentation of a product to a new release of said product, or to adapt support information related to a product. By partitioning the presentation system into a presentation engine and an action table, the presentation may be modified by changing the action table entries, whereas the presentation engine remains unchanged. Furthermore, for modifying the action table entries, programming skills are not required. Accordingly, the cost of developing and modifying presentations is reduced.

According to a preferred embodiment, the presentation system comprises at least one of the following: a display unit adapted for displaying information indicated by the current entry to a user, a user input inquiry unit adapted for prompting the user to provide input information, an external device control unit adapted for providing commands specified in the current entry to an external device, a status inquiry unit adapted for gathering system status information.

According to a preferred embodiment, the presentation engine is adapted for acquiring a return code when performing the action defined by an entry, said return code indicating an outcome of the action.

According to a preferred embodiment, the set of possible return codes comprises the return codes "yes" and "no".

According to a preferred embodiment, in case of the action being a user input inquiry or a system status inquiry, a return code "yes" or a return code "no" is returned.

According to a preferred embodiment, the presentation system is implemented as a support tool adapted for providing support information for an external device.

According to a preferred embodiment, said support information is provided in accordance with at least one of user inputs and external device status.

According to a preferred embodiment, at least one of the entries comprise commands to be sent to the external device.

Embodiments of the present invention further relate to an action table comprising a plurality of entries, with the action table being adapted for representing a decision tree. Each of the entries comprises an entry identifier; an action identifier defining an action to be performed when the entry is processed, with a return code indicating an outcome of the action being acquired when the action is being performed. Each of the entries further comprises one or more next entry identifiers specifying a next entry to be processed, said next entry identifiers corresponding to possible value of the return code.

The syntax of the action table entries can be defined in a way that setting For example, there might exist data fields dedicated to identifying audiovisual content to be displayed to the user, data fields for next entry identifiers that indicate subsequent entries to be processed, data fields containing textual annotations, etc. Hence, programming skills are not required for setting up and modifying the action table. For example, in a company, product development, marketing etc. may set up their presentations in a convenient manner. Furthermore, the presentation tool provided by embodiments of the present invention is well-suited for team work and project work. Several teams and individuals may provide parts of an audiovisual presentation, and then, the various parts are combined to form one presentation. Especially when compiling support information related to a product, it is advantageous that everybody who has contributed to the development of a product may also provide a respective part of a support tool for the product.

Another advantage is that updates and modifications can be implemented by amending one or more of the action table entries, by redefining the audiovisual information the entries relate to, etc. Parts of a former presentation may be reused, other parts may be added, etc. This is much more convenient than reprogramming a presentation program from scratch.

According to a preferred embodiment, at least one of the entries comprises a data field specifying presentation information to be displayed to a user, said presentation information comprising at least one of pictures, video clips, audio tracks, textual annotations.

According to a preferred embodiment, at least one of the entries comprises a data field indicating support information related to an external device, said support information comprising at least one of pictures, video clips, audio tracks, textual annotations.

According to a preferred embodiment, at least one of the entries comprises a data field specifying commands for an external device.

According to a preferred embodiment, at least one of the entries comprises a data field indicating a type of entry, with the types of entries comprising at least one of the following: user type entries adapted for at least one of displaying information to a user and prompting the user to provide input; internal command entries adapted for performing presentation engine commands; external device entries adapted for providing commands to an external device.

According to a preferred embodiment, at least one of the entries comprises data fields indicating next entry identifiers corresponding to different possible values the return code may assume.

According to a preferred embodiment, at least some of the entries comprise a data field specifying a delay, said delay being applied when performing the action defined by the entry.

The invention can be partly or entirely embodied or supported by one or more suitable software programs, which can be stored on or otherwise provided by any kind of data carrier, and which might be executed in or by any suitable data processing unit. Software programs or routines are preferably applied for implementing the above-described presentation engine, as well as for setting up and modifying an action table comprising a multitude of entries.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1 shows a presentation system;

Fig. 2 shows a data structure of an action table entry;

Fig. 3 shows an action table comprising 25 entries; and

Fig. 4 depicts a flow chart that corresponds to the action table of Fig. 3.

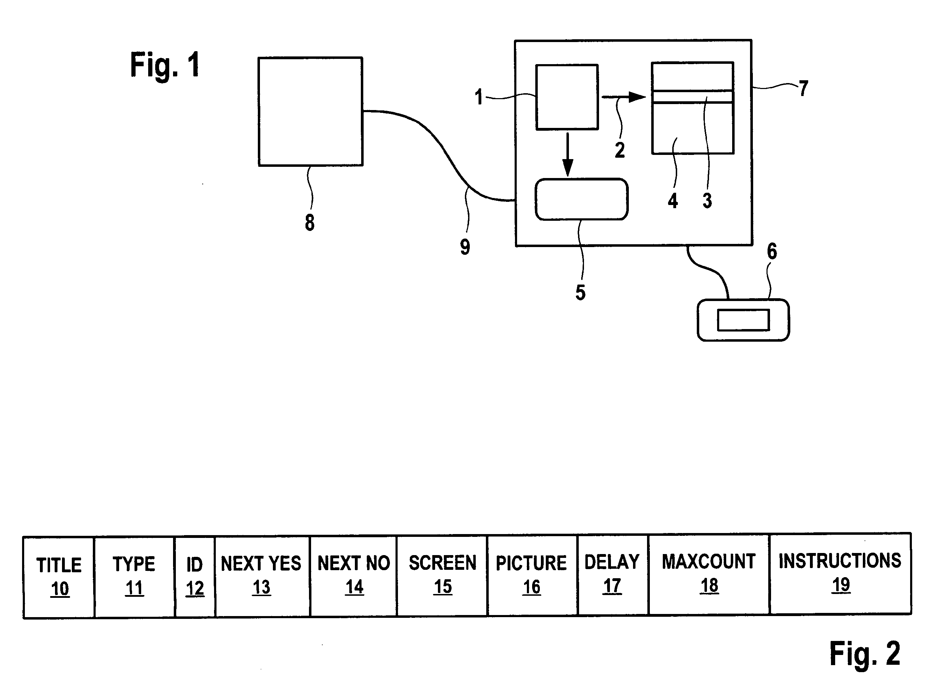

Fig. 1 shows a presentation system according to embodiments of the present invention. The presentation system comprises a presentation engine 1, with the presentation engine 1 being adapted for accessing (2) entries 3 of an action table 4. In each of the entries 3, actions to be performed by the presentation engine 1 are defined. For example, some of the entries 3 might relate to displaying presentation information on a display 5. The presentation information might e.g. comprise text, images, video contents, audio contents. The action table 4 might further comprise entries related to acquiring input from a user. For this purpose, the presentation system might comprise input devices such as e.g. a keyword 6, a speech input device, etc. For acquiring user input, a display screen showing different answering possibilities might be shown on the display 5. The action table 4 might further comprise entries related to internal instructions of the presentation system.

According to a first embodiment, the presentation system of Fig. 1 is used for presenting audiovisual contents, like e.g. text, images, audio contents, video contents, to a user, whereby the presented audiovisual content is varied in dependence on the user's input. Hence, the presentation can be customized according to the user's needs. Both the presentation engine 1 and the action table 4 might be installed on a computer system 7. The presentation engine 1 might be implemented as a software module, and the action table 4 can be realized as a data structure.

According to another embodiment, the presentation system is adapted for displaying support information related to an external device 8, which might e.g. be a complex electric or electronic device. In case the external device 8 does not work as expected, or in case any errors or other problems occur, the user might consult the presentation system, which is adapted for providing support information. The user is directed through a sequence of display and inquiry steps and has to answer questions related to the present status of the external device 8, to the error that has occurred, etc. Then, support information indicating how to solve the respective problem is displayed to the user.

The presentation system can be realized as a stand-alone solution. Alternatively, the presentation system might be connected (9) with the external device 8. For example, the action table 4 might comprise entries related to acquiring status information from the external device 8. Furthermore, the action table 4 might comprise entries related to transmitting control commands to the external device 8. Thus, the support system is not restricted to providing support information to the user, but may actively control the external device 8. By directing the user through a sequence of display steps and inquiry steps, and by transmitting commands to the external device 8, a recovery of the external device 8 can be accomplished in a lot of cases. Of course, the user might still call a support team. However, by implementing a support system as shown in Fig. 1, the number of calls the support team has to answer can be significantly reduced.

The support system can be implemented by installing a presentation engine 1 and an action table 4 on a computer system 7. In this embodiment, the support system and the external device are implemented as two separate entities. Alternatively, the support system can be integrated, together with the external device 8, in one common housing. If the external device 8 comprises a display, this display can be used for displaying support information to the user.

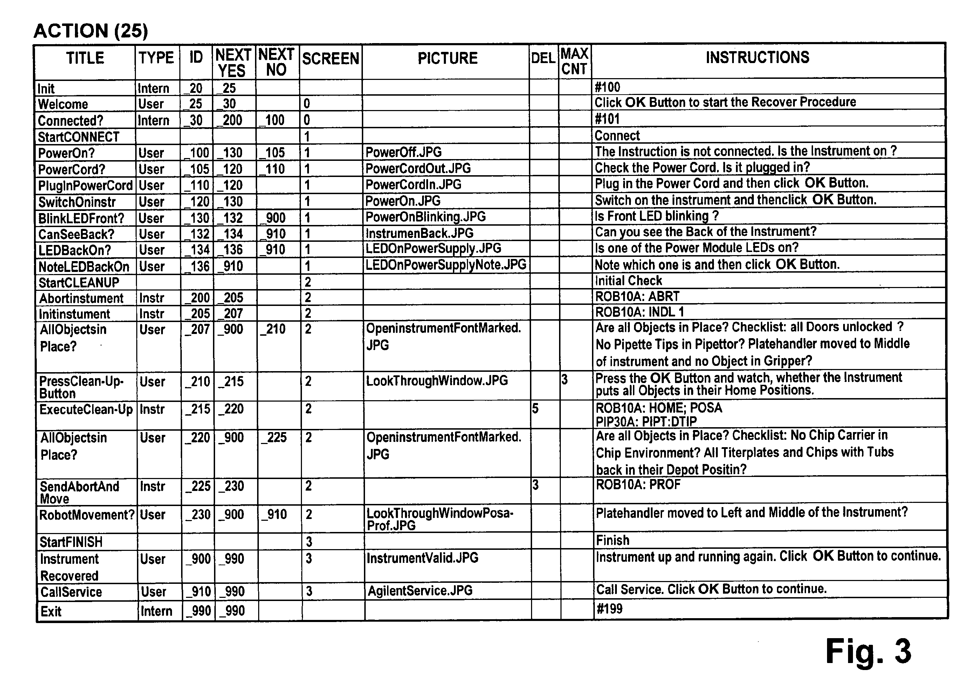

Fig. 2 provides a possible data structure for the action table entries. Furthermore, Fig. 3 shows an example of an action table comprising 25 entries, whereby the data structure of each of the 25 entries corresponds to the data structure given in Fig. 2.

The first data field 10 relates to the entry's title, which is stored in a variable Action.Title. The next data field 11 identifies a type of action to be performed. For example, there might exist actions of the type "user", which comprise actions related to displaying information, and to acquiring user input. The action table may further comprise actions of the type "Intern" that relate to internal commands of the presentation engine. In case the presentation system communicates with an external device, the action table might further comprise actions of the type "Instr". Actions of this type might e.g. relate to transmitting control commands from the presentation system to the external device, and to acquiring parameters from the external device. The respective action type of an entry is stored in a variable Action.ActionType. Data field 12 contains an entry identifier. The entry identifier is stored in a variable Action.ActionID.

The two data fields 13 (NextYes) and 14 (NextNo) are used for specifying a next entry, which is processed when processing of the present entry has been completed. In the course of performing the present action, a return code is acquired, whereby the return code may assume the two possible values "Yes" and "No". The return codes "Yes" and "No" may e.g. relate to user inputs, or to status parameters obtained from the external device. In dependence on the outcome of the current action, either the entry identified in data field 13 (NextYes) or the entry identified in data field 14 (NextNo) is processed. Data field 13 corresponds to "NextYes" and identifies an entry that will be processed if the return code of the current action is equal to "Yes". Data field 14 corresponds to "NextNo" and identifies a next entry that will be processed if a return code "No" is delivered by the current action. The two variables Action. NextYes and Action.NextNo are adapted for storing next entry identifiers for the two possible cases "NextYes" and "NextNo", respectively.

NextYesIDs and NextNoIDs contained in data fields 13 and 14 have to correspond with entry identifiers (IDs) of existing entries. In order to ensure referential integrity of the action table, a referential integrity check is performed before processing of the action table's entries is started.

Data fields 15 and 16 are used for defining the layout of a display screen that is presented to the user. In data field 15, a screen pattern is identified, with each screen pattern being represented by a step number of the step the screen pattern corresponds to. The step number is stored in a variable Action.StepNumber. Data field 16 may contain the name of a picture to be shown to the user. If there is no picture to be presented, data field 16 will remain empty. The picture's name is stored in a variable Action.PictureName. Instead of pictures, other audiovisual content like e.g. audio contents or video contents may be identified.

In data field 17, a delay value is specified. When performing the action specified by the current entry, a delay according to data field 17 will be applied. The delay value is stored in a variable Action.Delay. In data field 18, a parameter "MaxCount" is specified, which defines a maximum number of times an entry may be processed. If the number of times the entry is processed surpasses the value "MaxCount", processing will be terminated. This mechanism is introduced to handle problems related to circular references, i.e. to avoid endless loops. The parameter "MaxCount" is stored in the corresponding variable Action.MaxCount.

In case an entry is of the type "user", data field 19 comprises text to be displayed to a user. If the entry identifies a NextYesID without specifying a NextNoID, the presentation engine will display the text of data field 19 as a message together with an "OK" button. By clicking the "OK" button, the user confirms that the message has been acknowledged. After the user has clicked "OK", the entry specified in the "NextYes" data field 13 will be processed. Alternatively, if both a NextYesID and a NextNoID are specified, the presentation engine will display the text of data field 19 as a question, together with a "Yes" button and a "No" button. If the user clicks the "Yes" button, processing will be continued at the entry specified in the "NextYes" data field 13. If the user's answer is "No", processing will be continued at the entry specified in the "NextNo" data field 14. In the present embodiment, the possible answers only comprise "Yes" and "No".

However, three ore more possible answers may be presented to the user, with a respective return code being assigned to each one of the possible answers. For each of the possible values the return code may assume, a dedicated data field containing a corresponding next entry identifier has to be provided. For entries of the type "user", text to be displayed to the user is contained in a variable Action. Instructions.

In case the entry is of the type "Intern", data field 19 is used for specifying the respective internal instructions. Whenever an entry of the type "Intern" is encountered, the presentation engine will execute the internal instructions of data field 19, which are stored in the variable Action. Instructions. In case the entry is of the type "Instr", data field 19 will specify one or more control commands to be transmitted to the external device. These control commands are stored in the variable Action. Instructions.

The presentation engine 1 shown in Fig. 1 is adapted for accessing the action table's entries, and for performing actions specified by the entries. In this regard, the presentation engine 1 can be seen as a kind of "player" adapted for performing a presentation as specified by the action table.

In the following, a program listing of a presentation engine is given by way of example:
**1010 CurrentActionID = FindFirstActionID()**
**1020 While CurrentActionlD > 0**
**1030 Action = FindAction(CurrentActionID)**
**1040 Action.Count = Action.Count + 1**
**1050 If Action.Count > Action.MaxCount then Display("Action performed too often") and quit Loop**
**1060 DisplayScreenPattern(Action.StepNumber)**
**1070 DisplayPicture(Action.PictureName)**
**1080 If Action.ActionType = Intern Then CurrentActionID = ExecuteInternCommandAndReturnNextActionID(Action)**
**1090 Elseif Action.ActionType = Instr Then CurrentActionlD = ExecuteInstrumentCommandAndReturnNextActionID(Action )**
**1100 Elseif Action.ActionType = User Then Display(Action.Instructions) And wait for ButtonSelection by User And If ButtonPressed = OK or Yes then CurrentActionID = Action.NextYes Elseif ButtonPressed = No then CurrentActionlD = Action.NextNo**
   In the first line 1010, the function "FindFirstActionID" is performed. This function looks for a start code, in order to identify a first entry to be processed. In the example of Fig. 3, the entry "Init", entry ID _10, is identified as the first entry to be processed, because its instruction field contains a start code #100. The function "FindFirstActionID" returns a "NextYes" entry ID _15 and assigns the entry ID _15 to the variable CurrentActionID.
   In line 1020, a while-loop is set up. The while-loop comprises the program lines 1030 to 1100, whereby these program lines are repeatedly executed as long as the variable CurrentActionID is greater than zero. In line 1030, a function "FindAction(CurrentActionID)" is carried out. This function is adapted for identifying an entry with an ID equal to CurrentActionID, for fetching said entry, and for assigning the entry to the variable "Action". The function "FindAction(CurrentActionID)" will be able to fetch an entry corresponding to "CurrentActionID", because referential integrity has been checked in advance. In line 1040, the variable "Action.Count" is incremented by one, and the result is reassigned to the variable "Action.Count". For each action, there exists a corresponding variable "Action.Count", in order to keep track how many times the respective action has been performed. For each action, a parameter "MaxCount" may be specified in data field 18 of the entry. In line 1050, Action.Count is compared with Action.MaxCount. If Action.Count exceeds Action.MaxCount, then the message "Action performed to often" is displayed, and the while-loop is terminated.
   In line 1060, the function "DisplayScreenPattern(Action.StepNumber)" is carried out. This function is adapted for displaying a screen pattern that corresponds to a certain presentation step, whereby the presentation step is identified by the variable "Action.StepNumber". The function "DisplayPicture(Action.PictureName)" in line 1070 is responsible for displaying a picture contained in the variable "Action.PictureName".
   In the following lines 1080, 1090, 1100, a respective action specified by an entry is performed in dependence on the entry's action type. If the entry's action type, which is indicated by the variable Action.ActionType, is equal to "Intern", internal instructions contained in the variable "Action.Instructions" will be performed. For this purpose, the function "ExecuteInternCommandAndReturnNextActionID(Action)" is executed. This function either returns a NextYesID or a NextNoID. The NextYesID or NextNoID is assigned to the variable "CurrentActionID". If the variable "Action.Instructions" is equal to the exit code #199, the function "ExecuteInternCommandAndReturnNextActionID(Action)" will either return zero or a negative value. Accordingly, either zero or a negative value will be assigned to the variable "CurrentActionID". As a consequence, the condition "CurrentActionID > 0" in line 1030 is no longer true, and the while-loop is terminated.
   The next line 1090 relates to the case that the entry's action type is equal to "Instr". In this case, the variable "Action.Instruction" contains one or more control commands for an external instrument. The function "ExecuteInstrumentCommandAndReturnNextActionID(Action)" is adapted for handling these control commands. In case the control commands are sent to the external instrument, this function might return a NextYesID , which is assigned to the variable "CurrentActionID". However, in case the control commands cannot be transmitted to the external instrument, the function "ExecuteInstrumentCommandAndReturn-NextActionID(Action)" might return a NextNoID, and the NextNoID is assigned to the variable "CurrentActionID". If a NextNoID is specified in the present entry, processing will be continued at the NextNoID.
   Line 1100 relates to entries of the type "user". If the entry's action type is equal to "user", the variable "Action.Instructions" will either contain a message or a question to be displayed to the user. The function "Display(Action.Instructions)" is responsible for displaying the message or the question. Then, the presentation engine waits for user input. If a message is displayed to the user, the user may click on an OK button, in order to acknowledge that the message has been read. In this case, the entry's NextYesID is assigned to the variable "CurrentActionID". If a question is displayed to the user, the user may answer with "Yes" or "No". If the user selects the button "Yes", the entry's NextYesID contained in the variable "Action.NextYes" will be assigned to "CurrentActionID". If the user clicks on "No", the entry's NextNoID will be assigned to the variable "CurrentActionID".

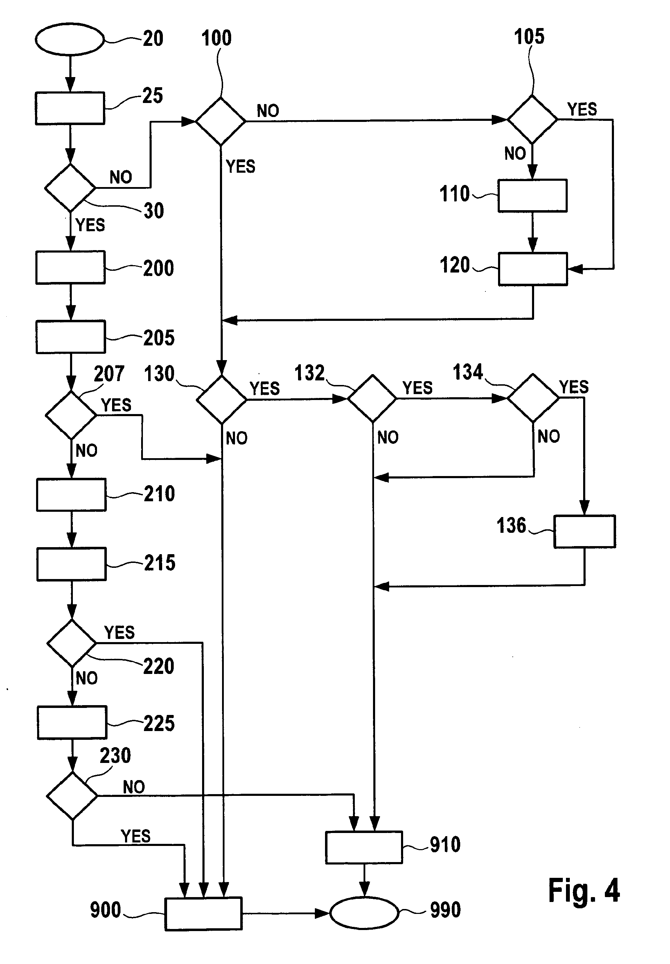

   In Fig. 3, an action table comprising 25 entries is shown. The action table of Fig. 3 relates to the presentation of support information for an external sample analysis device that is used for separating and analyzing fluid samples with high throughput. Fig. 4 shows a flow chart or decision tree representing the action table of Fig. 3. Each of the action table's entries corresponds to a step of the flow chart. In order to show the correlation between the action table entries of Fig. 3 and the corresponding steps of Fig. 4 more clearly, the entry ID of an action table entry is also used as a reference sign for identifying a corresponding one of the flow chart's method steps.
   When the presentation engine starts processing the action table entries, the entry "Init", entry ID _20, is used as a starting point, because it contains the start code #100. In Fig. 4, step 20 corresponds to the entry "Init". When the entry "Init" is processed, a NextYesID _25 is provided. Therefore, the entry "Welcome", entry ID _25, is processed next. The entry "Welcome" is of the type "user". For displaying information to the user, screen pattern 0 is utilized as indicated in the column "SCREEN". The text "Click OK Button to start the Recover Procedure" is displayed. Instructions of the type "user" prompt the user to provide input. After the user has clicked the OK button, the entry _30 identified by NextYesID is processed. The entry "Connected?", entry ID _30, is of the type "Intern". Accordingly, the entry "Connected?" is processed by the presentation engine itself. The instruction code #101 indicates that the presentation engine has to check if the external device is connected or not. If the external device is connected, processing will be continued at entry _200, as specified in data field NextYesID. If the external device is not connected, processing will be continued at entry _100, as specified in data field NextNoID. In Fig. 4, steps 25 and 30 are shown, which correspond to the entries _25 and _30.
   Hence, if the instrument is not connected, the entry "PowerOn?" will be processed. The entry "PowerOn?" belongs to a new section of the action table, which is named "StartCONNECT". In section "StartCONNECT", a screen pattern 1 is utilized. The entry "PowerOn?", entry ID_100, is of the type "user". The text "The instrument is not connected. Is the instrument on?" is displayed, together with a picture "PowerOff.JPG". If the user's answer is "Yes", entry _130 will be processed, as specified in data field NextYesID. If the user's answer is "No", entry _105 will be processed, which is specified in data field NextNoID.
   Let us assume the user has clicked the "No" button. Now, the entry "PowerCord?" with entry ID_105 is carried out, which is an entry of the type "user". On the display, the text "Check the Power Cord. Is it plugged in?" is shown, together with a picture "PowerCordOut.JPG". If the user's answer is "Yes", entry _120 will be processed, as specified in column NextYesID. If the user's answer is "No", processing will be continued at entry _110.
   We assume that the user's answer is "No". The entry "PlugInPowerCord", entry ID _110, is of the type "user" and relates to a display step. The text "Plug in the Power Cord and then click OK Button." is displayed together with a picture "PowerCordIn.JPG". When the user clicks "OK", entry processing is continued at entry _120 as indicated in column NextYesID. The entry "SwitchOnInstr", entry ID_120, also relates to a display step. The text "Switch on the Instrument and then click OK Button." and the picture "PowerOn.JPG" are displayed. After the user has clicked "OK", processing is continued at entry ID _130. In entry _130, "BlinkLEDFront?", the question "Is Front LED blinking?" is displayed, together with a picture "PowerOnBlinking.JPG". If the user's answer is "No", processing will continue at entry _900, "InstrumentRecovered". Otherwise, if the user answers "Yes", processing will continue at entry _132. We assume that the user's answer has been "Yes". Accordingly, the entry _132 "CanSeeBack?" is processed, the question "Can you see the Back of the Instrument?" is displayed, and the picture "InstrumentBack.JPG" is shown. If the user's answer is "No", the entry "CallService", entry ID _910, will be processed. If the user selects "Yes", the entry "LEDBackOn?", entry ID _134, will be carried out. This entry of the type "user". The question "Is one of the Power Module LEDs on?" is displayed together with the picture "LEDOnPowerSupply.JPG". In case of the user's answer being "No", the entry "CallService", entry ID _910, is processed. In case of "Yes", the entry "NoteLEDBackOn", entry ID _136, is selected as a next entry. The entry "NoteLEDBackOn" is of the type "user" and relates to a display step. The text "Note which one is on and then click OK Button." is shown, and the picture "LEDOnPowerSupplyNote.JPG" is displayed. Afterthe user has clicked "OK", the entry "CallService", entry ID _910, is processed. When the user calls support at this stage, he or she may already provide detailed information with regard to the error. In Fig. 4, the steps 100 to 136 in the upper right part correspond to the entries _100 to _136 of the action table's section "StartCONNECT".
   The next section "StartCLEANUP" of the action table comprises the entries _200 to _230. If the question "Connected?" of entry _30 has been answered with "Yes", entry _200 will be processed. Before this is done, a new screen pattern 2 is set up. Entry _200 "AbortInstrument" is of the type "Instr". Many problems can be fixed by performing resets and re-initializations of the external instrument. Accordingly, the control commands "ROB10A: ABRT" contained in the instruction field are transmitted from the support system to the external device. After the control commands have been sent, processing is continued with the entry _205 specified in the data field NextYesID. The entry "InitInstrument", entry ID _205, is of the type "Instr" as well. The control commands "ROB10A: INDL 1" are transmitted to the instrument. Then, entry _207 "AllObjectsInPlace?" is processed, which is an entry of the type "user". The following questions are presented to the user: "Are all Objects in Place? Checklist: all Doors unlocked? No Pipette Tips in Pipettor? Platehandler moved to Middle of Instrument and no Object in Gripper?". In addition, the picture "OpenInstrumentFrontMarked.JPG" is shown. The user may answer "Yes" or "No". If the user's answer is "Yes", entry _900 "InstrumentRecovered" will be processed. Otherwise, if the user's answer is "No", processing will be continued at entry _210 "PressClean-Up-Button". Entry _210 is of the type "user". The text "Press the OK Button and watch, whether the Instrument puts all Objects in their Home Positions." is displayed, and the picture "LookThroughWindow.JPG" is shown. In entry _210, the parameter "MaxCount" has been set to three, which indicates that entry _210 must not be carried out more than three times. After the user has selected "OK", the entry "ExecuteClean-Up", entry ID _215, is processed, which is an entry of the type "Instr". The control commands "ROB10A: HOME; POSA PIP30A: PIPT:DTIP" are sent to the external instrument. In order to permit the user to watch the instrument's operation, a delay "5" is specified.
   After processing the entry _215, the entry _220 "AllObjectsInPlace?" is carried out. Entry _220 is of the type "user". The questions "Are all Objects in Place? Checklist: No Chip Carrier in Chip Environment? All Titerplates and Chips with Tubs back in their Depot Position?" are presented on the screen, and the picture "OpenInstrumentFrontMarked.JPG" is shown. If the user's answer is "Yes", the entry "InstrumentRecovered", entry ID _900, will be processed. Otherwise, if the user's answer is "No", processing will continue at entry _225. The entry "SendAbortAndMove", entry ID _225, is of the type "Instr". The control commands "ROB10A: PORF" are forwarded to the external device. Furthermore, a delay "3" is specified. Then, the entry "RobotMovement?", entry ID _230, is processed. The question "Platehandler moved to Left and Middle of the Instrument?" is displayed, the picture "LookThroughWindowPosaPorf.JPG" is shown, and the user may answer with "Yes" or "No". In case of "Yes", the instrument is recovered, and accordingly, entry _900 is processed. In case of "No", the user is asked to call the service, with entry ID _910 "CallService" being specified as NextNoID. The entries _200 to _230 of the section "StartCLEANUP" correspond to the method steps 200 to 230 of Fig. 4.
   In the action table's next section "StartFINISH", a further screen pattern 3 is set up. The section "StartFINISH" comprises the entry _900 "InstrumentRecovered", and the entry _910 "CallService". The entries _900 and _910 indicate the two possible outcomes of the recovery procedure. The entry _900 "InstrumentRecovered" is processed in case of a positive result of the recovery procedure, whereas the entry _910 "CallService" relates to the case that further support is needed. When processing the entry _900 "InstrumentRecovered", the text "Instrument up and running again. Click OK Button to continue." is displayed, and the picture "InstrumentValid.JPG" is shown. After the user has clicked the OK button, processing is continued at entry _990. The entry "CallService", entry ID _910, is an entry of the type "user". The text "Call Service. Click OK Button to continue." is displayed together with the picture "AgilentService.JPG". As soon as the user has clicked the OK button, processing is continued at entry _990. The "Exit" entry _990 is an entry of the type "Intern". The instruction field of entry _990 comprises an exit code #199. If the function "ExecuteInternCommandAndReturnNextActionID(Action)" is called with "Action.Instructions" being equal to the exit code #199, this function will either return zero or a negative value. As a consequence, the condition "CurrentActionID > 0" in line 1030 is no longer true, and processing is terminated.

## Claims

1. A presentation engine adapted for performing a presentation in accordance with a predefined decision tree, said decision tree being represented by an action table comprising a set of entries, each entry comprising an entry identifier, the presentation engine comprising
an entry tracking unit adapted for finding a current entry specified by a current entry identifier,
an entry processing unit adapted for performing an action defined by the current entry, said action being at least one of: displaying information, gathering user input, gathering system status parameters, controlling an external device;
a next entry selection unit adapted for acquiring a return code indicating an outcome of the action; with the current entry comprising next entry identifiers for possible values of the return code, for selecting, in dependence on the return code, a next entry identifier of a next entry to be processed, and for redefining this next entry identifier as a current entry identifier.

2. The presentation engine of claim 1, wherein at least one of the entries comprises one or more data fields specifying presentation information to be displayed to a user, said presentation information comprising at least one of pictures, video clips, audio tracks, textual annotations.

3. The presentation engine of claim 1 or any one of the above claims, wherein at least one of the entries comprises a data field for an action identifier indicating an action to be performed when the entry is being processed.

4. The presentation engine of claim 1 or any one of the above claims, wherein at least one of the entries comprises a data field indicating a type of entry, with the types of entries comprising at least one of the following:
user type entries adapted for at least one of displaying information to a user and
prompting the user to provide input;
internal type entries adapted for performing presentation engine commands;
external device entries adapted for providing commands to an external device.

5. The presentation engine of claim 1 or any one of the above claims, wherein at least some of the entries comprise a data field specifying a delay, said delay being applied when performing an action defined by an entry.

6. The presentation engine of claim 1 or any one of the above claims, wherein the presentation engine comprises at least one of the following:
a display unit adapted for displaying presentation information as specified by an entry,
a user input inquiry unit adapted for prompting the user to provide input information,
an external device control unit adapted for providing commands specified in the current entry to an external device,
a status inquiry unit adapted for gathering status information.

7. The presentation engine of claim 1 or any one of the above claims, wherein the presentation engine is adapted for providing support information related to an external device.

8. The presentation engine of claim 1 or any one of the above claims, wherein the presentation engine is further adapted for providing commands specified in an entry to an external device.

9. The presentation engine of claim 1 or any one of the above claims, wherein the presentation engine is adapted for being executed on a computer system.

10. A presentation system adapted for performing a presentation in accordance with a predefined decision tree, said decision tree being represented by an action table comprising a plurality of entries, each entry comprising an entry identifier,
with the presentation system comprising, in addition to the action table, a presentation engine according to any one of claims 1 to 9, said presentation engine being adapted for accessing entries of the action table and for performing respective actions defined by the entries, with said actions comprising at least one of: displaying information, gathering user input, gathering system status parameters, controlling an external device.

11. The presentation system of claim 10, wherein the presentation system comprises at least one of the following:
a display unit adapted for displaying information indicated by the current entry to a user,
a user input inquiry unit adapted for prompting the user to provide input information,
an external device control unit adapted for providing commands specified in the current entry to an external device,
a status inquiry unit adapted for gathering system status information.

12. The presentation system of claim 10 or any one of the above claims, wherein the presentation engine is adapted for acquiring a return code when performing the action defined by an entry, said return code indicating an outcome of the action.

13. The presentation system of claim 10 or any one of the above claims, wherein the set of possible return codes comprises the return codes "yes" and "no".

14. The presentation system of claim 10 or any one of the above claims, wherein, in case of the action being a user input inquiry or a system status inquiry, a return code "yes" or a return code "no" is returned.

15. The presentation system of claim 10 or any one of the above claims, wherein the presentation system is implemented as a support tool adapted for providing support information for an external device.

16. The presentation system of claim 15, wherein said support information is provided in accordance with at least one of user inputs and external device status.

17. The presentation system of claim 15 or any one of the above claims, wherein at least one of the entries comprise commands to be sent to the external device.

18. An action table comprising a plurality of entries, said action table being adapted for representing a decision tree, with each of the entries comprising
an entry identifier;
an action identifier defining an action to be performed when the entry is processed, with a return code indicating an outcome of the action being acquired when the action is being performed;
one or more next entry identifiers specifying a next entry to be processed, said next entry identifiers corresponding to possible value of the return code.

19. The action table of claim 18, wherein at least one of the entries comprises a data field specifying presentation information to be displayed to a user, said presentation information comprising at least one of pictures, video clips, audio tracks, textual annotations.

20. The action table of claim 18 or any one of the above claims, wherein at least one of the entries comprises a data field indicating support information related to an external device, said support information comprising at least one of pictures, video clips, audio tracks, textual annotations.

21. The action table of claim 18 or any one of the above claims, wherein at least one of the entries comprises a data field specifying commands for an external device.

22. The action table of claim 18 or any one of the above claims, wherein at least one of the entries comprises a data field indicating a type of entry, with the types of
entries comprising at least one of the following:
user type entries adapted for at least one of displaying information to a user and prompting the user to provide input;
internal command entries adapted for performing presentation engine commands;
external device entries adapted for providing commands to an external device.

23. The action table of claim 18 or any one of the above claims, wherein at least one of the entries comprises data fields indicating next entry identifiers corresponding to different possible values the return code may assume.

24. The action table of claim 18 or any one of the above claims, wherein at least some of the entries comprise a data field specifying a delay, said delay being applied when performing the action defined by the entry.

25. A method for performing a presentation in accordance with a predefined decision tree, said decision tree being represented by an action table comprising a set of entries, each entry comprising an entry identifier, the method comprising steps of:
finding a current entry specified by a current entry identifier;
performing an action defined by the current entry, said action being at least one of: displaying information, gathering user input, gathering system status parameters, controlling an external device;
acquiring a return code indicating an outcome of the action;
accessing the current entry, which comprises next entry identifiers for all possible values of the return code, and selecting, in dependence on the return code, a next entry identifier of a next entry to be processed.

26. The method of claim 25, further comprising a step of redefining the selected next entry identifier as a current entry identifier.

27. A software program or product, preferably stored on a data carrier, for executing the method of claim 25 or any one of the above claims, when run on a data processing system such as a computer.

## Amended claims

### Amended claims in accordance with Rule 86(2) EPC.

**1.** A presentation engine (1) adapted for performing a presentation in accordance with a predefined decision tree, said decision tree being represented by an action table (4) comprising a set of entries (3), each entry comprising an entry identifier 12), the presentation engine comprising
an entry tracking unit adapted for finding a current entry (3) specified by a current entry identifier (12),
an entry processing unit adapted for performing an action (19) defined by the current entry (3), said action being at least one of: displaying information, gathering user input, gathering system status parameters, controlling an external device;
a next entry selection unit adapted for acquiring a return code indicating an outcome of the action; with the current entry comprising next entry identifiers (13, 14) for possible values of the return code, for selecting, in dependence on the return code, a next entry identifier of a next entry to be processed, and for redefining this next entry identifier as a current entry identifier.

**2.** The presentation engine of claim 1, wherein at least one of the entries comprises one or more data fields specifying presentation information to be displayed to a user, said presentation information comprising at least one of pictures, video clips, audio tracks, textual annotations.

**3.** The presentation engine of claim 1 or 2, wherein at least one of the entries comprises a data field for an action identifier indicating an action to be performed when the entry is being processed.

**4.** The presentation engine of any one of the above claims 1-3, wherein at least one of the entries comprises a data field indicating a type of entry, with the types of entries comprising at least one of the following:
user type entries adapted for at least one of displaying information to a user and prompting the user to provide input;
internal type entries adapted for performing presentation engine commands;
external device entries adapted for providing commands to an external device.

**5.** The presentation engine of any one of the above claims 1-4, wherein at least some of the entries comprise a data field specifying a delay, said delay being applied when performing an action defined by an entry.

**6.** The presentation engine of any one of the above claims 1-5, wherein the presentation engine comprises at least one of the following:
a display unit (6) adapted for displaying presentation information as specified by an entry,
a user input inquiry unit adapted for prompting the user to provide input information,
an external device control unit adapted for providing commands specified in the current entry to an external device,
a status inquiry unit adapted for gathering status information.

**7.** The presentation engine of any one of the above claims 1-6, wherein the presentation engine is adapted for providing support information related to an external device.

**8.** The presentation engine of any one of the above claims 1-7, wherein the presentation engine is further adapted for providing commands specified in an entry to an external device.

**9.** The presentation engine of any one of the above claims 1-8, wherein the presentation engine is adapted for being executed on a computer system.

**10.** A presentation system adapted for performing a presentation in accordance with a predefined decision tree, said decision tree being represented by an action table (4) comprising a plurality of entries (3), each entry comprising an entry identifier (12), with the presentation system comprising, in addition to the action table (4), a presentation engine (1) according to any one of claims 1 to 9, said presentation engine being adapted for accessing entries of the action table and for performing respective actions defined by the entries, with said actions comprising at least one of: displaying information, gathering user input, gathering system status parameters, controlling an external device.

**11.** The presentation system of claim 10, wherein the presentation engine is adapted for acquiring a return code when performing the action defined by an entry, said return code indicating an outcome of the action.

**12.** The presentation system of claim 10 or 11, wherein the set of possible return codes comprises the return codes "yes" and "no".

**13.** The presentation system of any one of the above claims 10-12, wherein, in case of the action being a user input inquiry or a system status inquiry, a return code "yes" or a return code "no" is returned.

**14.** The presentation system of any one of the above claims 10-13, wherein the presentation system is implemented as a support tool adapted for providing support information for an external device.

**15.** The presentation system of claim 14, wherein said support information is provided in accordance with at least one of user inputs and external device status.

**16.** The presentation system of claim 14 or 15, wherein at least one of the entries comprise commands to be sent to the external device.

**17.** An action table (4) comprising a plurality of entries (3), said action table being adapted for representing a decision tree, with each of the entries comprising
an entry identifier (12);
an action identifier (19) defining an action to be performed when the entry is processed, with a return code indicating an outcome of the action being acquired when the action is being performed;
one or more next entry identifiers (13, 14) specifying a next entry to be processed, said next entry identifiers corresponding to possible value of the return code.

**18.** The action table of claim 17, wherein at least one of the entries comprises a data field specifying presentation information to be displayed to a user, said presentation information comprising at least one of pictures, video clips, audio tracks, textual annotations.

**19.** The action table of any one of the above claims 17-18, wherein at least one of the entries comprises a data field indicating support information related to an external device, said support information comprising at least one of pictures, video clips, audio tracks, textual annotations.

**20.** The action table of any one of the above claims 17-19, wherein at least one of the entries comprises a data field specifying commands for an external device.

**21.** The action table of any one of the above claims 17-20, wherein at least one of the entries comprises a data field indicating a type of entry, with the types of entries comprising at least one of the following:
user type entries adapted for at least one of displaying information to a user and prompting the user to provide input;
internal command entries adapted for performing presentation engine commands;
external device entries adapted for providing commands to an external device.

**22.** The action table of any one of the above claims 17-21, wherein at least one of the entries comprises data fields indicating next entry identifiers corresponding to different possible values the return code may assume.

**23.** The action table of any one of the above claims 17-22, wherein at least some of the entries comprise a data field specifying a delay, said delay being applied when performing the action defined by the entry.

**24.** A method for performing a presentation in accordance with a predefined decision tree, said decision tree being represented by an action table (4) comprising a set of entries (3), each entry comprising an entry identifier (12), the method comprising steps of:
finding a current entry (3) specified by a current entry identifier (12);
performing an action (19) defined by the current entry, said action being at least one of: displaying information, gathering user input, gathering system status parameters, controlling an external device;
acquiring a return code indicating an outcome of the action;
accessing the current entry, which comprises next entry identifiers (13, 14) for all possible values of the return code, and selecting, in dependence on the return code, a next entry identifier of a next entry to be processed.

**25.** The method of claim 24, further comprising a step of redefining the selected next entry identifier as a current entry identifier.

**26.** A software program or product, preferably stored on a data carrier, for executing the method of claim 24 or 25, when run on a data processing system such as a computer.
